# EUROPÄISCHE PATENTANMELDUNG

(11) **EP 3 984 817 A1**
(43) Veröffentlichungstag der Anmeldung: **20.04.2022**
(21) Anmeldenummer: 21199615.2
(22) Anmeldetag: 28.09.2021
(51) Int. Cl.: B60P 3/36, A47B 9/10

(54) **VERRIEGELUNGSEINRICHTUNG, HÖHENVERSTELLBARER TISCH MIT DER VERRIEGELUNGSEINRICHTUNG, FAHRZEUG MIT DEM HÖHENVERSTELLBAREN TISCH UND VERFAHREN ZUM VERRIEGELN DES HÖHENVERSTELLBAREN TISCHS**

(30) Priorität: 14.10.2020 DE 102020212967
(71) Anmelder: Kesseböhmer Holding KG, 49152 Bad Essen (DE)
(72) Erfinder: GRAß, Manuel, 72622 Nürtingen (DE)
(74) Vertreter: Prüfer & Partner mbB Patentanwälte · Rechtsanwälte

(57) **Zusammenfassung**

Ein höhenverstellbarer Tisch (1) mit einem Verriegelungssystem (2) zum Verriegeln des höhenverstellbaren Tischs (1) in einem Fahrzeug (12) wird offenbart, wobei der Tisch (1) eine in Einbaulage des Tischs untenliegende Komponente, mittels der der Tisch (1) an einem Boden des Fahrzeugs abstützbar ist, und eine bewegliche Komponente, die relativ zu der untenliegenden Komponente beweglich ist, und die dazu ausgebildet ist, eine Tischplatte relativ zu der untenliegenden Komponente in einer Höhe zu verstellen, aufweist. Ein erstes Verriegelungselement (9) ist mit der beweglichen Komponente verbunden, und ein zweites Verriegelungselement (10) ist mit dem Boden des Fahrzeugs (12) verbindbar. Durch die bewegliche Komponente wird über eine formschlüssige Verbindung zwischen dem ersten Verriegelungselement (9) und dem zweiten Verriegelungselement (10) eine Klemmkraft erzeugt, um ein Verschieben des höhenverstellbaren Tischs (1) zu verhindern.

## Beschreibung

Die Erfindung betrifft eine Verriegelungseinrichtung, einen höhenverstellbaren Tisch mit der Verriegelungseinrichtung, ein Fahrzeug mit dem höhenverstellbaren Tisch und ein Verfahren zum Verriegeln des höhenverstellbaren Tischs, insbesondere in Fahrzeugen auf dem Gebiet von Wohnwagen oder Wohnmobilen.

Da in einem Wohnwagen oder einem Wohnmobil die Platzverhältnisse üblicherweise eingeschränkt sind, werden oft zum Vorbereiten einer Liegefläche andere Einrichtungsgegenstände verwendet. Beispielsweise wird eine Tischplatte eines Tischs als Teil einer Liegefläche umfunktioniert. Dabei wird die Tischplatte auf eine Höhe von Sitzbänken, eine sogenannte Bettposition, gebracht und beispielsweise zwischen zwei Sitzbänke eingebracht, um gemeinsam damit die Liegefläche zu bilden.

Um eine größere Flexibilität beim Bewohnen des Wohnwagens oder Wohnmobils zu erzielen, ist es vorteilhaft, wenn der Tisch nicht unveränderlich an einer Stelle befestigt ist, sondern wenn der Tisch frei in dem Fahrzeug verschiebbar ist.

Dabei besteht jedoch das Problem, dass sich der Tisch während eines Fahrens des Wohnwagens oder des Wohnmobils darin bewegt und gegebenenfalls beschädigt wird oder andere Möbel beschädigt.

Ein Befestigen des Tischs für das Fahren mittels einer zusätzlichen Befestigungseinrichtung ist jedoch aufwändig, sodass es möglicherweise nicht durchgeführt wird, was die Beschädigungsgefahr drastisch erhöht.

Daher liegt der Erfindung die Aufgabe zugrunde, eine einfach zu bedienende und kostengünstige Befestigungsmöglichkeit für einen Tisch in einem Fahrzeug bereitzustellen.

Die Aufgabe wird durch eine Verriegelungseinrichtung gemäß Anspruch 1, einen höhenverstellbaren Tisch gemäß Anspruch 6, ein Fahrzeug gemäß Anspruch 11 und ein Verfahren gemäß Anspruch 12 gelöst. Vorteilhafte Weiterentwicklungen der Erfindung sind in den abhängigen Ansprüchen enthalten.

Gemäß einem Aspekt der Erfindung weist ein Verriegelungssystem zum Verriegeln eines höhenverstellbaren Tischs in einem Fahrzeug ein erstes Verriegelungselement, das mit einer beweglichen Komponente des Tischs fest verbindbar ist, und ein zweites Verriegelungselement, das mit dem Fahrzeug fest verbindbar ist, auf. Das erste Verriegelungselement und das zweite Verriegelungselement sind dazu ausgebildet, durch eine erste Bewegung des ersten Verriegelungselements zu dem zweiten Verriegelungselement in einer ersten Richtung miteinander in Eingriff zu gelangen und durch eine zweite lineare Bewegung in einer zweiten Richtung, die eine andere Richtung als die erste Richtung ist, eine in der zweiten Richtung formschlüssige Verbindung herzustellen.

Dieses Verriegelungssystem ermöglicht es, den höhenverstellbaren Tisch durch zwei einfache Bewegungen in dem Fahrzeug zu verriegeln, sodass eine aufwändige Befestigung des Tisches in dem Fahrzeug nicht erforderlich ist. Die in der zweiten Richtung formschlüssige Verbindung wird durch an dem ersten und zweiten Verriegelungselement jeweils vorgesehenen Anlageflächen, die einander bei der zweiten Bewegung zueinander in der zweiten Richtung berühren können und zwischen denen eine Kraft in der zweiten Richtung auftreten kann, bereitgestellt. Durch eine solche Kraft in der zweiten Richtung kann in Verbindung mit einer Oberflächenrauigkeit der Anlageflächen ein Kraftschluss in der ersten Richtung erzeugt werden, so dass der höhenverstellbare Tisch in dem Fahrzeug verriegelt werden kann.

In einer vorteilhaften Ausgestaltung des Verriegelungssystems weist das erste Verriegelungselement eine langgestreckte Form mit einem ersten Ende und einem zweiten Ende in einer Längsrichtung auf, wobei das erste Ende von der verbindbaren beweglichen Komponente abgewandt ist und das zweite Ende der verbindbaren beweglichen Komponente zugewandt ist. Ferner weist das erste Verriegelungselement entlang der Längsrichtung einen ersten Bereich, der senkrecht zu der Längsrichtung in einem vorbestimmten Umfangswinkelbereich eine erste Abmessung senkrecht zu der Längsrichtung aufweist, und einen zweiten Bereich entlang der Längsrichtung, der senkrecht zu der Längsrichtung in dem Umfangswinkelbereich eine zweite Abmessung aufweist, auf, wobei die erste Abmessung größer als die zweite Abmessung ist und der erste Bereich dem ersten Ende näher als der zweite Bereich ist. Das zweite Verriegelungselement weist in dieser Ausgestaltung ein plattenförmiges Element auf, das eine Aussparung mit einer senkrecht zu der ersten Richtung dritten Abmessung, die kleiner als die erste Abmessung und größer als die zweitem Abmessung ist, hat, und das erste Verriegelungselement und das zweite Verriegelungselement sind dazu ausgebildet, dass das erste Verriegelungselement mit dem zweiten Bereich in die Aussparung des zweiten Verriegelungselements in Eingriff kommen kann.

Durch diese Ausgestaltung, in der die Längsrichtung der zweiten Richtung entspricht, bieten die Verriegelungselemente eine einfache und sichere Möglichkeit, die in der zweiten Richtung formschlüssige Verbindung herzustellen.

In einer weiteren vorteilhaften Weiterentwicklung des Verriegelungssystems ist das erste Verriegelungselement als Bolzen mit einem kreisrunden Querschnitt gebildet und die erste Abmessung ist ein erster Durchmesser und die zweite Abmessung ist ein zweiter Durchmesser.

Diese Ausführung des ersten Verriegelungselements als Bolzen ist einfach und kostengünstig herzustellen und kann einfach mit einer gewünschten Stabilität konzipiert werden.

Gemäß einer weiteren vorteilhaften Weiterentwicklung des Verriegelungssystems weist das erste Verriegelungselement in der Längsrichtung zwischen dem ersten Bereich und dem zweiten Bereich einen Übergangsbereich, insbesondere einen Konus, auf, dessen Abmessung dazu ausgebildet ist, sich von der ersten Abmessung zu der zweiten Abmessung kontinuierlich zu verändern.

Durch diesen Übergangsbereich ist es möglich, das erste Verriegelungselement bei der Bewegung in der zweiten Richtung zu dem zweiten Verriegelungselement zu zentrieren.

Bei einer weiteren vorteilhaften Ausgestaltung des Verriegelungssystems hat das plattenförmige Element entgegen der ersten Richtung benachbart zu der Aussparung eine weitere Aussparung, deren Breite senkrecht zu der ersten Richtung entgegen der ersten Richtung kontinuierlich größer wird, um eine Einführschräge zu bilden.

Durch das Bilden der Einführschräge kann das erste Verriegelungselement, und somit der höhenverstellbaren Tisch, einfach an die richtige Position zu dem zweiten Verriegelungselement gebracht werden.

Gemäß einem weiteren Aspekt der Erfindung weist ein höhenverstellbarer Tisch mit einem Verriegelungssystem eine in Einbaulage des Tischs untenliegende Komponente, mittels der der Tisch an einem Boden des Fahrzeugs abstützbar ist, und die bewegliche Komponente auf, die relativ zu der untenliegenden Komponente beweglich ist, und die dazu ausgebildet ist, eine Tischplatte relativ zu der untenliegenden Komponente in einer Höhe zu verstellen, wobei das erste Verriegelungselement mit der beweglichen Komponente fest verbunden ist, und der höhenverstellbare Tisch dazu ausgebildet ist, in der formschlüssigen Verbindung eine Klemmkraft in der zweiten Richtung zu erzeugen oder aufrechtzuerhalten.

Durch diese Ausbildung des Tischs kann das erste Verriegelungselement zu der untenliegenden Komponente des Tischs verstellbar sein, sodass eine Verriegelungsbewegung des ersten Verriegelungselements zu der untenliegenden Komponente, und somit eine Verriegelung des Tischs im Fahrzeug, möglich ist, ohne zusätzliche aufwändige Führungen oder Verriegelungseinrichtungen bereitzustellen.

In einer vorteilhaften Ausgestaltung des höhenverstellbaren Tischs weist er eine Hubsäule mit drei teleskopartig ineinander beweglichen Säulen auf, wobei die untenliegende Komponente mit einer in der Einbaulage des Tischs untenliegenden Säule der Hubsäule verbunden oder durch die untenliegende Säule ausgebildet ist, und die bewegliche Komponente durch eine Mittelsäule, die zwischen der untenliegenden Säule und einer obenliegenden Säule der Hubsäule angeordnet ist, gebildet ist.

Durch die Verwendung der Hubsäule mit drei Säulen kann ein großer Verstellbereich für eine Höhenverstellung des höhenverstellbaren Tischs ermöglicht werden, ohne dass die Hubsäule eine große eingefahrene Länge aufweist, wodurch bei dem großen Verstellbereich eine niedrige unterste Höhe der Tischplatte möglich ist.

Bei einer weiteren vorteilhaften Weiterentwicklung des höhenverstellbaren Tischs weist die Hubsäule eine Gasfeder auf, die die bewegliche Komponente in die zweite Richtung drängt.

Durch das Vorsehen der Gasfeder wird zum einen die Höhenverstellung des Tischs erleichtert, da das Gewicht der Tischplatte kompensierbar ist, zum anderen ermöglicht sie das Drängen der beweglichen Komponente, und somit des ersten Verriegelungselements, nach oben für die Verriegelungsbewegung in der zweiten Richtung, sodass die in der zweiten Richtung formschlüssige Verbindung und die Klemmkraft automatisch hergestellt werden.

Bei einer weiteren vorteilhaften Ausgestaltung des höhenverstellbaren Tischs weist er eine Blockiereinrichtung auf, die eine Bewegung der beweglichen Komponente zu der untenliegenden Komponente in oder entgegen der zweiten Richtung blockiert.

Durch die Blockiereinrichtung ist ein Feststellen einer im Rahmen des Verstellbereichs beliebigen Höhe der Tischplatte möglich. Ferner kann die Klemmkraft in der formschlüssigen Verbindung, die durch eine manuelle Aktion erzeugt wurde, aufrechterhalten werden.

In einer weiteren vorteilhaften Ausgestaltung des höhenverstellbaren Tischs weist die Gasfeder die Blockiereinrichtung auf.

Durch das Vorsehen der Gasfeder mit der Blockiereinrichtung ist es nicht erforderlich, weitere Feststelleinrichtungen für die Bewegung der beweglichen Komponente zu der untenliegenden Komponente bereitzustellen.

Entsprechend einem weiteren Aspekt der Erfindung weist ein Fahrzeug einen höhenverstellbaren Tisch und ein fest mit dem Fahrzeug verbundenes zweites Verriegelungselement auf.

In diesem Fahrzeug ist es einfach möglich, den höhenverstellbaren Tisch in dem Fahrzeug zu verriegeln. Ferner kann der Aufwand für zusätzliche Verriegelungen eingespart werden.

Gemäß einem noch weiteren Aspekt der Erfindung weist ein Verfahren zum Verriegeln eines höhenverstellbaren Tischs in einem Fahrzeug die folgenden Schritte auf: Bewegen des ersten Verriegelungselement zu dem zweiten Verriegelungselement in der ersten Richtung, sodass das erste Verriegelungselement und das zweite Verriegelungselement miteinander in Eingriff gelangen, und Bewegen des ersten Verriegelungselements zu dem zweiten Verriegelungselement in der zweiten Richtung, sodass die in der zweiten Richtung formschlüssige Verbindung entsteht und die Klemmkraft in der formschlüssigen Verbindung erzeugt wird.

Durch dieses Verfahren ist es einfach möglich, ohne zusätzliche Befestigungselemente vorzusehen oder betätigen zu müssen, den höhenverstellbaren Tisch in dem Fahrzeug zu verriegeln.

Gemäß einer vorteilhaften Ausgestaltung des Verfahrens wird die Bewegung des ersten Verriegelungselements in der zweiten Richtung durch eine Gasfeder angetrieben oder unterstützt.

Durch das Vorsehen der Gasfeder wird zum einen die Höhenverstellung des Tischs erleichtert, da das Gewicht der Tischplatte kompensierbar ist, und zum anderen ermöglicht es das Drängen der beweglichen Komponente, und somit des ersten Verriegelungselements, nach oben für die Verriegelungsbewegung in der zweiten Richtung. Somit wird die in der zweiten Richtung formschlüssige Verbindung automatisch bei einem Loslassen oder mit einer geringen manuellen Kraft bei einem Anheben der Tischplatte hergestellt.

In einer vorteilhaften Weiterentwicklung des Verfahrens wird ein Feststellen der beweglichen Komponente zu der untenliegenden Komponente durch eine blockierbare Gasfeder durchgeführt.

Durch das Feststellen der beweglichen Komponente relativ zu der untenliegenden Komponente durch die blockierbare Gasfeder ist es nicht erforderlich, weitere Feststelleinrichtungen für die Bewegung der beweglichen Komponente zu der untenliegenden Komponente bereitzustellen, um die Verriegelung des ersten Verriegelungselements zu dem zweiten Verriegelungselement sicherzustellen, wobei außerdem ein Feststellen einer im Rahmen des Verstellbereichs beliebigen Höhe der Tischplatte möglich ist.

Gemäß einer weiteren vorteilhaften Ausgestaltung des Verfahrens werden zum nachträglichen Lösen der in der zweiten Richtung formschlüssigen Verbindung die folgenden Schritte ausgeführt: Entriegeln der blockierbaren Gasfeder, und Drücken der beweglichen Komponente entgegen der zweiten Richtung.

Durch diese Schritte ist es einfach möglich, die Verriegelung des Tischs in dem Fahrzeug wieder aufzuheben, sodass der Tisch einfach an eine andere Stelle versetzt werden kann.

Nachfolgend wird die Erfindung anhand von Ausführungsbeispielen unter Bezugnahme auf die beigefügten Zeichnungen erläutert.

Insbesondere zeigt:
- Fig. 1: eine Ansicht eines erfindungsgemäßen höhenverstellbaren Tischs ohne Tischplatte und ein Teil eines Verriegelungssystems gemäß der Erfindung;
- Fig. 2: eine seitliche Schnittdarstellung des höhenverstellbaren Tischs;
- Fig. 3: eine seitliche Schnittdarstellung eines unteren Bereichs des höhenverstellbaren Tischs mit dem Verriegelungssystem in einem Zustand, in dem Verriegelungselemente des Verriegelungssystems im Eingriff aber noch nicht verriegelt sind;
- Fig. 4: eine Ansicht des höhenverstellbaren Tischs und des Verriegelungssystems von unten;
- Fig. 5a: eine Schnittdarstellung des unteren Bereichs des höhenverstellbares Tischs von vorne mit den Verriegelungselementen in einem Zustand, in dem die Verriegelungselemente des Verriegelungssystems miteinander im Eingriff aber noch nicht verriegelt sind; und
- Fig. 5b: eine Schnittdarstellung des unteren Bereich des höhenverstellbaren Tischs von vorne mit den Verriegelungselementen in einem Zustand, in dem die Verriegelungselemente des Verriegelungssystems miteinander im Eingriff und verriegelt sind.

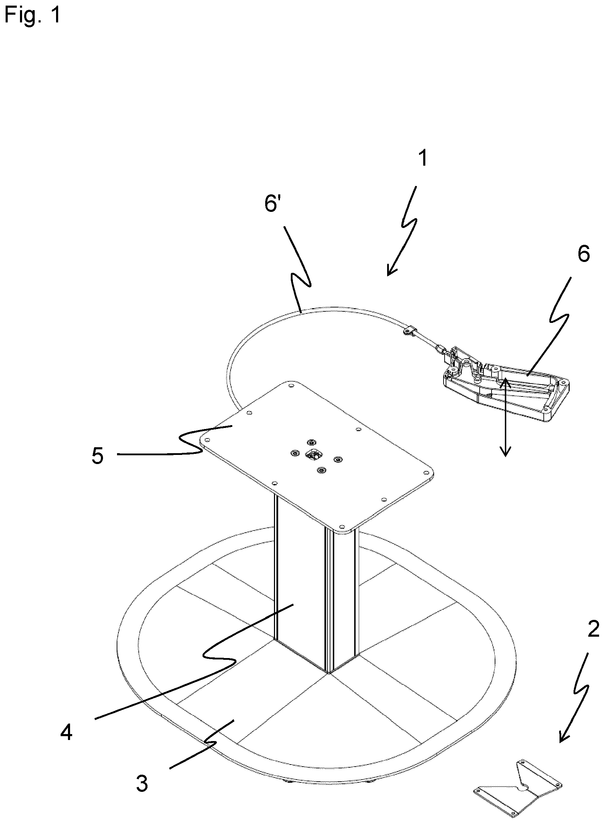

**Fig. 1** zeigt eine Ansicht eines erfindungsgemäßen höhenverstellbaren Tischs 1 ohne Tischplatte, und ein Teil eines Verriegelungssystems 2.

Der höhenverstellbare Tisch 1 weist einen Tischfuß als eine in Einbaulage des Tischs 1 untenliegende Komponente 3 auf, mit der sich der höhenverstellbare Tisch 1 an einem Boden eines Fahrzeugs abstützen kann. Ferner weist der höhenverstellbare Tisch 1 eine Hubsäule 4 auf, um die Tischplatte (nicht gezeigt) in ihrer Höhe zu verstellen.

Darüber hinaus weist der höhenverstellbare Tisch 1 einen Träger 5 auf, auf den die Tischplatte montiert werden kann. In Fig. 1 ist außerdem ein später beschriebener Auslöser 6 mit einem Bowdenzug 6' für eine Verriegelung gezeigt.

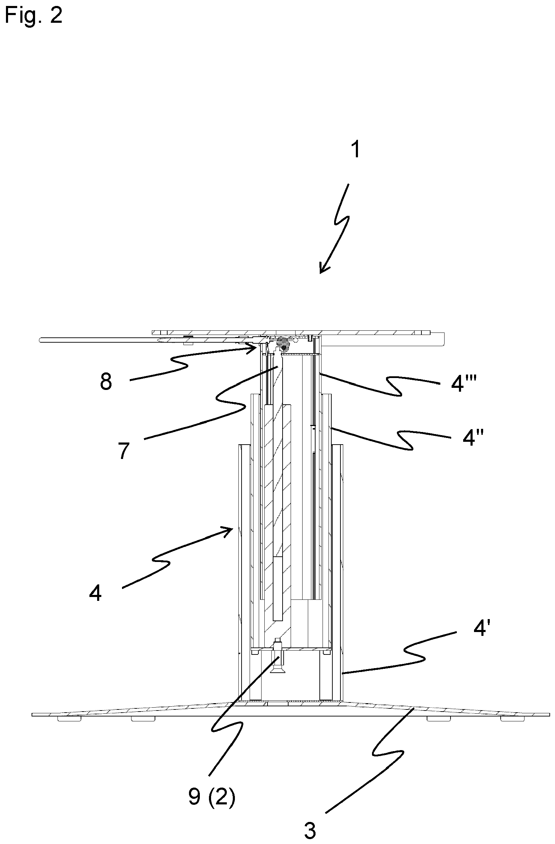

**Fig. 2** zeigt eine seitliche Schnittdarstellung des höhenverstellbaren Tischs 1.

Der höhenverstellbaren Tisch 1 weist die Hubsäule 4 mit drei Säulen, nämlich einer untenliegenden Säule 4', einer Mittelsäule 4" und einer obenliegenden Säule 4'" auf, die teleskopartig ineinander beweglich sind. In alternativen Ausführungsformen weist die Hubsäule 4 eine andere Anzahl von Säulen, beispielsweise nur zwei oder mehr als drei Säulen auf, die teleskopartig ineinander beweglich sind.

Die untenliegende Komponente 3 ist in der Einbaulage des Tischs 1 mit der untenliegenden Säule 4' verbunden. In alternativen Ausführungsformen ist die untenliegende Komponente 3 in die untenliegende Säule 4' integriert oder die untenliegende Säule 4' bildet die untenliegende Komponente 3 aus.

Der höhenverstellbare Tisch 1 weist ferner eine bewegliche Komponente auf, die relativ zu der untenliegenden Komponente 3 beweglich ist, und die dazu ausgebildet ist, die Tischplatte relativ zu der untenliegenden Komponente 3 in einer Höhe zu verstellen. In der dargestellten Ausführungsform ist die Mittelsäule 4" als die bewegliche Komponente definiert. In alternativen Ausführungsformen kann beispielsweise auch die obenliegende Säule 4'" als die bewegliche Komponente definiert sein.

Die Hubsäule 4 weist ferner eine Gasfeder 7 auf, die die bewegliche Komponente der Hubsäule 4 in der Einbaulage des Tischs 1 nach oben drängt. Die Gasfeder 7 ist in dieser Ausführungsform zwischen der Mittelsäule 4" und der obenliegenden Säule 4'" eingebaut, bewirkt aber durch eine Übersetzungseinrichtung, dass sich sowohl die Mittelsäule 4" als auch die obenliegende Säule 4'" gegenüber der untenliegenden Säule 4' bewegen, sodass die Gasfeder 7 die bewegliche Komponente, nämlich die Mittelsäule 4", in der Einbaulage des Tischs 1 nach oben drängt. In alternativen Ausführungsformen ist anstatt der Gasfeder 7 entweder ein elektrischer Linearantrieb zum Bewegen der beweglichen Komponente zu der untenliegenden Komponente 3 vorgesehen, oder es ist kein Antrieb vorgesehen und die Tischplatte wird rein manuell verstellt.

Die Gasfeder 7 weist eine Blockiereinrichtung 8 auf, mittels der die Hubsäule 7 innerhalb ihres Hubwegs blockiert werden kann, sodass ein Feststellen einer beliebigen Höhe im Rahmen eines durch die Übersetzungseinrichtung übersetzten Verstellbereichs der Tischplatte möglich ist. Durch die Übersetzungseinrichtung ist hier der Verstellbereich der Tischplatte doppelt so groß wie der Hubweg der Gasfeder. Durch die Blockierung der Gasfeder 7 ist daher auch die bewegliche Komponente relativ zu der untenliegenden Komponente 3 in Richtung einer Hubbewegung der Tischplatte feststellbar. Die Blockiereinrichtung 8 ist mit dem in Fig. 1 gezeigten Auslöser 6 mittels des Bowdenzugs 6' entriegelbar, sodass die Feststellung der Tischplatte gelöst werden kann. In alternativen Ausführungsformen ist entweder eine separate Blockiereinrichtung für das Feststellen einer Höhe der Tischplatte vorgesehen, oder es ist keine Blockiereinrichtung vorgesehen, sondern der Tisch fährt durch die Kraft der Gasfeder 7 immer in seine obere Endlage.

Ein erstes Verriegelungselement 9 des Verriegelungssystems 2 ist mit der Mittelsäule 4", als der beweglichen Komponente des Tischs 1, fest verbunden, nämlich darin eingeschraubt. In alternativen Ausführungsformen ist das erste Verriegelungselement 9 in einer anderen Weise, beispielsweise verschweißt, fest verbunden.

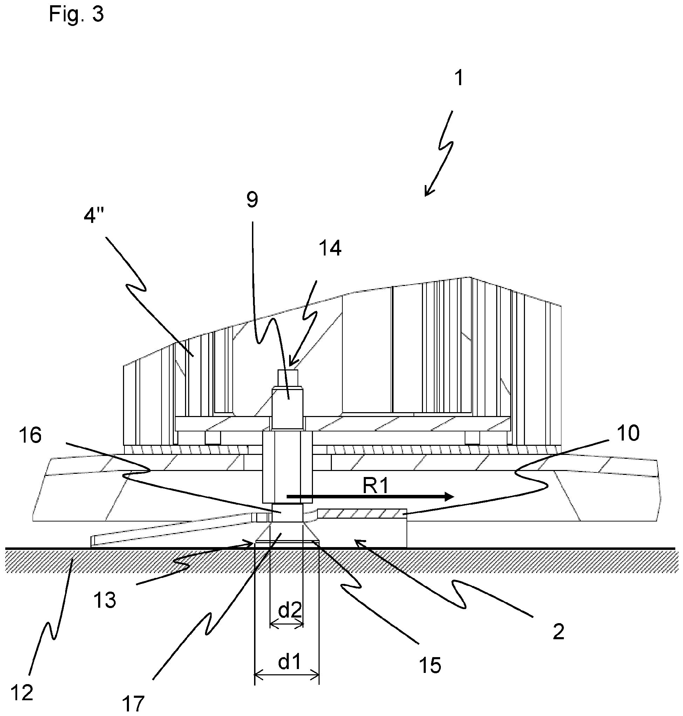

**Fig. 3** zeigt eine seitliche Schnittdarstellung eines unteren Bereichs des höhenverstellbaren Tischs 1 mit dem Verriegelungssystem 2, das das erste Verriegelungselement 9 und ein zweites Verriegelungselement 10 aufweist, in einem Zustand, in dem die Verriegelungselemente 9, 10 miteinander im Eingriff aber noch nicht verriegelt sind.

Das erste Verriegelungselement 9 und das zweite Verriegelungselement 10 sind dazu ausgebildet, um, wie in Fig. 3 gezeigt, durch eine erste Bewegung des ersten Verriegelungselements 9 zu dem zweiten Verriegelungselement 10 in einer ersten Richtung R1 miteinander in Eingriff zu gelangen.

Das erste Verriegelungselement 9 ist als ein Bolzen mit einem kreisrunden Querschnitt ausgebildet, hat also eine langgestreckte Form und ist in Fig. 3 senkrecht ausgerichtet. Der Bolzen weist in einer Längsrichtung ein erstes Ende 13 und ein zweites Ende 14 auf. Das erste Ende 13 des Bolzens als erstes Verriegelungselement 9 ist von der beweglichen Komponente in Form der Mittelsäule 4" abgewandt und das zweite Ende 14 des Bolzens als das erste Verriegelungselement 9 ist der beweglichen Komponente, also der Mittelsäule 4", zugewandt.

Das erste Verriegelungselement 9 hat entlang seiner Längsrichtung einen ersten Bereich 15, der senkrecht zu der Längsrichtung in einem Umfangswinkelbereich eine erste Abmessung senkrecht zu der ersten Richtung R1 aufweist. Da das erste Verriegelungselement 9 als der kreisrunde Bolzen ausgebildet ist, ist die erste Abmessung d1 ein erster Durchmesser und der Umfangswinkelbereich ist senkrecht zu der ersten Richtung R1 vollständig umlaufend, entspricht also einem Vollkreis mit 360°um die Längsrichtung. Das erste Verriegelungselement 9 hat entlang seiner Längsrichtung ferner einen zweiten Bereich 16, der eine zweite Abmessung senkrecht zu der Längsrichtung in dem Umfangswinkelbereich aufweist. Aufgrund der Ausbildung des Verriegelungselements 9 als der kreisrunde Bolzen ist die zweite Abmessung d2 ein zweiter Durchmesser und der Umfangswinkelbereich senkrecht zu der ersten Richtung R1 ist ebenfalls vollständig umlaufend, entspricht also ebenfalls einem Vollkreis mit 360°. Die erste Abmessung d1 ist größer als die zweite Abmessung d2 und der erste Bereich 15 ist dem ersten Ende 13 näher als der zweite Bereich 16.

Das erste Verriegelungselement 9 weist in der Längsrichtung zwischen dem ersten Bereich 15 und dem zweiten Bereich 16 einen Übergangsbereich 17 auf, dessen Abmessung dazu ausgebildet ist, sich von der ersten Abmessung, also dem Außendurchmesser, d1 zu der zweiten Abmessung, also dem Außendurchmesser, d2 kontinuierlich zu verändern. In der vorliegenden Ausführungsform ist der Übergangsbereich 17 als ein Konus ausgebildet.

In alternativen Ausführungsformen ist das erste Verriegelungselement 9 nicht als Bolzen mit einem kreisrunden Querschnitt ausgebildet, sondern hat beispielsweise einen ovalen oder eckigen Querschnitt oder ist als ein Haken ausgebildet.

Das zweite Verriegelungselement 10 ist mit einem Fahrzeug 12, insbesondere mit einem Boden des Fahrzeugs 12, fest verbunden.

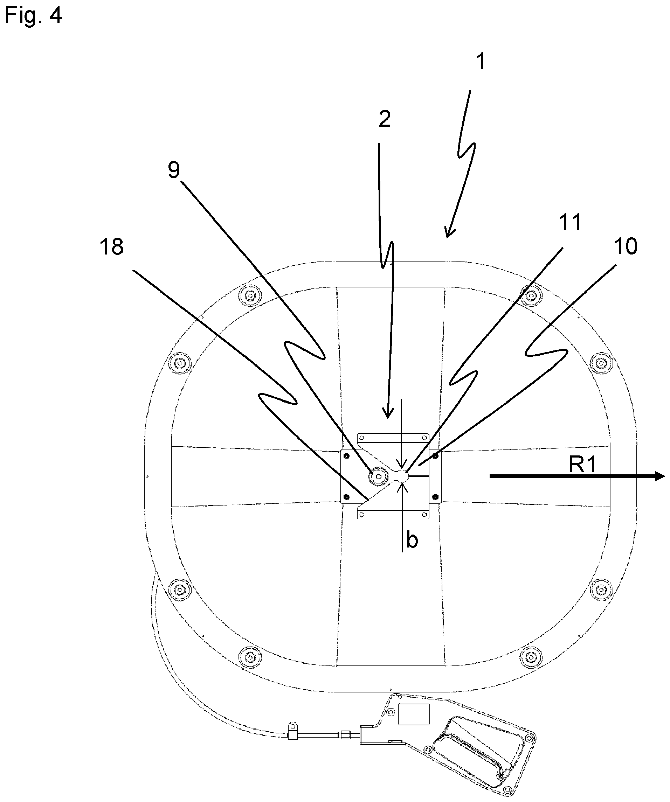

**Fig. 4** zeigt eine Ansicht des höhenverstellbaren Tisches und des Verriegelungssystems 2 von unten.

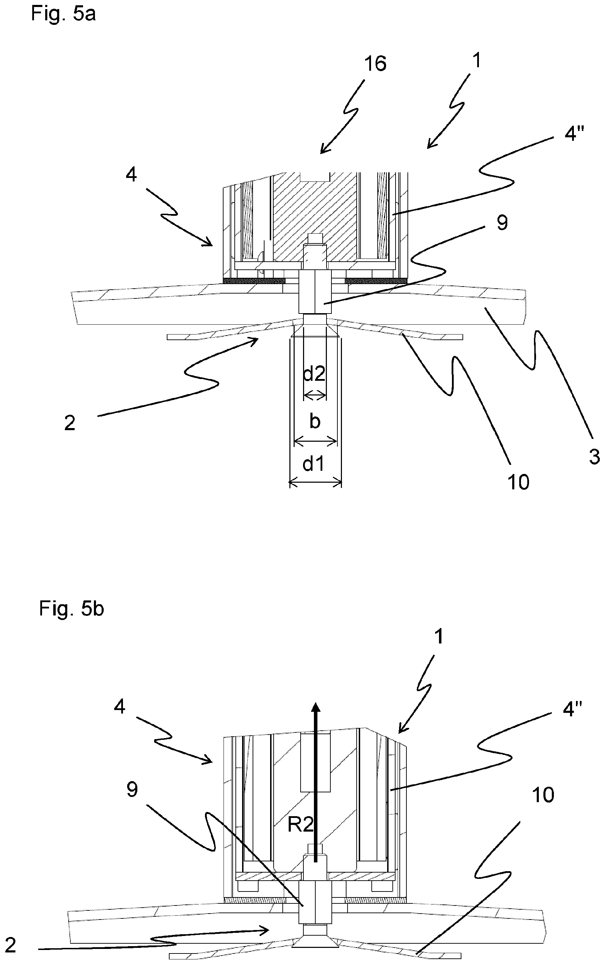

Das zweite Verriegelungselement 10 weist ein plattenförmiges Element auf, das eine Aussparung 11 mit einer senkrecht zu der ersten Richtung R1 dritten Abmessung b hat. Wie in Fig. 5a nachstehend zu sehen ist, ist die dritte Abmessung b kleiner als die erste Abmessung, nämlich der Durchmesser, d1, und größer als die zweite Abmessung, nämlich der Durchmesser, d2. Wie in Fig. 3 zu sehen ist, sind das erste Verriegelungselement 9 und das zweite Verriegelungselement 10 dazu ausgebildet, dass das erste Verriegelungselement 9 mit seinem zweiten Bereich 16 in die Aussparung 11 des zweiten Verriegelungselement 10 in Eingriff kommen kann. Dies ist dadurch möglich, da die dritte Abmessung b größer als die zweite Abmessung d2 ist. Fig. 4 zeigt eine Darstellung, in der das erste Verriegelungselement 9 und das zweite Verriegelungselement 10 nicht miteinander im Eingriff sind.

Ferner weist das zweite Verriegelungselement 10 eine weitere Aussparung 18 auf. Die weitere Aussparung 18 ist entgegen der ersten Richtung R1 benachbart zu der Aussparung 11 angeordnet, liegt also in der Bewegung in der ersten Richtung R1 vor der Aussparung 11. Die Breite der weiteren Aussparung 18 wird entgegen der ersten Richtung R1 senkrecht zu der ersten Richtung R1 kontinuierlich größer. Dadurch bildet die weitere Aussparung 18 eine Einführschräge zum Einführen des ersten Verriegelungselements 9 in die Aussparung 11 des zweiten Verriegelungselements 10. In einer alternativen Ausführung ist die weitere Aussparung 18 nicht vorgesehen und die Aussparung 11 ist beispielsweise am Rand des zweiten Verriegelungselements 10 vorgesehen.

Fig. 5a zeigt eine Schnittdarstellung eines unteren Bereich des höhenverstellbaren Tischs 1 von vorne mit den Verriegelungselementen 9, 10 in einem Zustand, in dem die Verriegelungselemente 9, 10 des Verriegelungssystems 2 im Eingriff aber noch nicht verriegelt sind, und Fig. 5b zeigt eine Schnittdarstellung des unteren Bereich des höhenverstellbaren Tischs 1 von vorne mit den Verriegelungselementen 9, 10 in einem Zustand, in dem die Verriegelungselemente 9, 10 des Verriegelungssystems 2 im Eingriff und verriegelt sind.

Hier ist nochmals zu sehen, dass das erste Verriegelungselement 9 mit der Mittelsäule 4" der Hubsäule 4 fest verbunden ist. In einer untersten Position der Mittelsäule 4" ragt das erste Verriegelungselement 9 aus der Säule 4. Um mit dem zweiten Verriegelungselement 10 in Eingriff gelangen zu können, müssen das erste Verriegelungselement 9, und somit die Mittelsäule 4", zumindest annähernd in ihrer untersten Position sein. Ausgehend von dem in Fig. 5a gezeigten Zustand, in dem das erste Verriegelungselement 9 mit dem zweiten Verriegelungselement 10 im Eingriff ist, ist in Fig. 5b zu sehen, dass das erste Verriegelungselement 9 und das zweite Verriegelungselement 10 durch eine zweite lineare Bewegung in einer zweiten Richtung R2, die eine andere als die erste Richtung R1 ist, nämlich hier senkrecht nach oben, eine in der zweiten Richtung R2 formschlüssige Verbindung, also eine Verriegelung herstellen. Die formschlüssige Verbindung ist aus dem Grund möglich, da die Abmessung d1 größer als die Abmessung b ist und somit jeweils eine Anlagefläche bzw., bedingt durch den Konus, eine Anlagekante an dem ersten Verriegelungselement 9 und dem zweiten Verriegelungselement 10 bildet. Der Übergangsbereich 17, also der Konus, dient zum Zentrieren des ersten Verriegelungselements 9 zu dem zweiten Verriegelungselement 10 und dadurch ist auch ein Verriegeln ohne ein seitliches Spiel zwischen dem ersten Verriegelungselement 9 und dem zweiten Verriegelungselement 10 möglich. Die zweite Richtung R2 der zweiten Bewegung ist senkrecht zu der ersten Richtung R1. In alternativen Ausführungsformen ist die zweite Richtung R2 nicht senkrecht zu der ersten Richtung R1, jedoch schließt sie einen Winkel zu der ersten Richtung R1 ein, sodass sich die erste Richtung R1 von der zweiten Richtung R 2 unterscheidet.

In der in der zweiten Richtung R2 formschlüssigen Verbindung wird durch den höhenverstellbaren Tisch 1 eine Klemmkraft in der zweiten Richtung R2 erzeugt. Diese Klemmkraft wird dadurch erzeugt, dass die Gasfeder 7 eine Ausschubkraft erzeugt, die wiederum über die beweglich Komponente und die untenliegende Komponente 3 eine Normalkraft in der zweiten Richtung R2 in der formschlüssigen Verbindung zwischen dem ersten Verriegelungselement 9 und dem zweiten Verriegelungselement 10 erzeugt. Durch das Blockieren der Hubsäule 7 durch die Blockiereinrichtung 8 in der Position, in der die Normalkraft erzeugt wird, wird die Klemmkraft in der zweiten Richtung R2 in der formschlüssigen Verbindung aufrechterhalten. In der Ausführungsform mit der Gasfeder 7, aber ohne Blockiereinrichtung, wirkt die Kraft der Gasfeder 7 weiterhin in der zweiten Richtung R2 in der formschlüssigen Verbindung, um die Klemmkraft in der zweiten Richtung R2 aufrechtzuerhalten. In den alternativen Ausführungsformen ohne Gasfeder wird die Klemmkraft in der zweiten Richtung R2 entweder durch den elektrischen Linearantrieb oder durch die separate Blockiereinrichtung, die die manuell aufgebrachte Handkraft speichert, aufrechterhalten.

In einer weiteren alternativen Ausführungsform ist das zweite Verriegelungselement 10 an der Stelle, an der der Formschluss mit dem ersten Verriegelungselement 9 entsteht, also an einer Unterseite in der Aussparung 11, mit einer Vertiefung, beispielsweise einer Kegelsenkung, versehen. Dadurch wird auch hinsichtlich einer Bewegung in der ersten Richtung R1 ein Formschluss erzeugt.

Durch die in der Beschreibung zu Fig. 2 erwähnte Blockiereinrichtung 8 der Hubsäule 4 ist die bewegliche Komponente, nämlich die Mittelsäule 4", in der zweiten Richtung R2, die der Hubbewegung der Tischplatte entspricht, durch die Hubsäule 4 feststellbar. Der höhenverstellbare Tisch 1 kann so lange in der Höhe verstellt werden, solange der Auslöser 6 betätigt ist, um die Blockiereinrichtung 8 zu entriegeln. Durch Loslassen des Auslösers 6 wird die bewegliche Komponente zu der untenliegenden Komponente also verriegelt.

Im Betrieb wird zum Verriegeln des höhenverstellbaren Tischs 1 in dem Fahrzeug 12 zunächst das erste Verriegelungselement 9 zu dem zweiten Verriegelungselement 10 in der ersten Richtung R1 so bewegt, dass das erste Verriegelungselement 9 und das zweite Verriegelungselement 10 miteinander in Eingriff gelangen. Dazu wird beispielsweise der höhenverstellbare Tisch 1 zwischen zwei Sitzbänken so verschoben, dass das erste Verriegelungselement 9 mit seinem zweiten Bereich 16 in die Aussparung 11 des zweiten Verriegelungselements 10 eingreift. Dieses Eingreifen wird durch die weitere Aussparung 18 unterstützt, die, sofern vorhanden, bei einer Bewegung des Tischs mit zumindest einer Komponente in der ersten Richtung R1 das erste Verriegelungselement 9 so führt, dass es automatisch in die Aussparung 11 eingreifen kann. Falls eine Höhenposition, in der das erste Verriegelungselement 9 in das zweite Verriegelungselement 10 eingreifen kann, nicht bereits eingenommen ist, muss die Tischplatte zuvor zumindest annähernd in ihre unterste Position gebracht werden.

Wenn das erste Verriegelungselement 9 und das zweite Verriegelungselement 10 miteinander im Eingriff sind, wird das erste Verriegelungselement 9 zu dem zweiten Verriegelungselement 10 in der zweiten Richtung R2 so bewegt, dass in der zweiten Richtung R2 zwischen jeweiligen zugewandten Anlageflächen des ersten Verriegelungselements 9 und des zweiten Verriegelungselements 10 die formschlüssige Verbindung zwischen dem ersten Verriegelungselement 9 und dem zweiten Verriegelungselement 10 entsteht und eine Klemmkraft zwischen den Anlageflächen in der formschlüssigen Verbindung in der zweiten Richtung R2 erzeugt wird. Das Bewegen des ersten Verriegelungselements 9 in der zweiten Richtung R2 wird durch die Gasfeder 7 angetrieben. Durch eine Kraft der Gasfeder 7 wird das erste Verriegelungselement 9 in der formschlüssigen Verbindung gegen das zweite Verriegelungselement 10 gedrückt und somit die Klemmkraft erzeugt. Durch diese Klemmkraft in der zweiten Richtung R2 wird über Oberflächenrauigkeiten der Anlageflächen ein Reibschluss in der ersten Richtung R1 erzeugt und der höhenverstellbare Tisch in dem Fahrzeug verriegelt. In alternativen Ausführungsformen wird das Bewegen in der zweiten Richtung R2 und das Erzeugen der Klemmkraft von Hand durchgeführt und durch die Gasfeder 7 lediglich unterstützt, oder, sofern die Gasfeder 7 nicht vorgesehen ist, durch eine bloße manuelle Kraft durchgeführt. In einer weiteren alternativen Ausführungsform wird das Bewegen und Erzeugen der Klemmkraft durch einen anderen Antrieb, beispielsweise den elektrischen Linearantrieb, durchgeführt.

Nach dem Bewegen in der zweiten Richtung R2 wird die Mittelsäule 4", nämlich als die bewegliche Komponente, relativ zu der untenliegenden Komponente 3, nämlich dem Tischfuß, festgestellt, sodass sie sich in der zweiten Richtung R2 zu dem Tischfuß nicht bewegen kann. Das Feststellen der beweglichen Komponente zu der untenliegenden Komponente 3 erfolgt durch Loslassen des Auslösers 6, wodurch die Blockiereinrichtung 8 der Gasfeder 7 die Bewegung in oder eine Bewegung entgegen der zweiten Richtung R2 blockiert. Die Mittelsäule 4", und somit das erste Verriegelungselement 9, sind also in einer Stellung blockiert, in der das erste Verriegelungselement 9 gegen das zweite Verriegelungselement drückt und die Klemmkraft erzeugt wird, so dass der Tisch 1 in seiner Positionierung fixiert ist und auf Grund der Klemmkraft nicht mehr verschoben werden kann. Somit ist keine zusätzliche Auslösung für eine Bodenverriegelung erforderlich. In einer alternativen Ausführungsform wird die bewegliche Komponente zu der untenliegenden Komponente nicht durch die Blockiereinrichtung 8 der Gasfeder 7 festgestellt, sondern durch eine separate Feststelleinrichtung. In der weiteren alternativen Ausführungsform ohne Blockiereinrichtung ist ein Aufrechterhalten der Klemmkraft in der zweiten Richtung R2 durch die Ausschubkraft der Gasfeder 7 gewährleistet.

In dem Fall, in dem der höhenverstellbare Tisch 1 von der Position, in der er durch das Verriegelungssystem 2 verriegelt ist, entfernt werden soll, wird die Verriegelung dadurch gelöst, dass die blockierbare Gasfeder 7 entriegelt wird. Dies erfolgt durch den Auslöser 6, der die Lösebewegung über den Bowdenzug 6' an die Blockiereinrichtung 8 der Gasfeder 7 weitergibt. Nachdem die Blockiereinrichtung 8 gelöst ist, wird die bewegliche Komponente, nämlich die Mittelsäule 4", beispielsweise durch ein Niederdrücken der Tischplatte über die obenliegende Säule 4'" und die Übersetzungseinrichtung entgegen der zweiten Richtung R2 gedrückt. In alternativen Ausführungsformen wird die Verriegelung durch die separate Blockiereinrichtung gelöst, oder falls keine Blockiereinrichtung vorgesehen ist, die Tischplatte gegen die Klemmkraft beispielsweise der Gasfeder nach unten gedrückt. In einer weiteren alternativen Ausführungsform wird die Tischplatte mittels des elektrischen Linearantriebs nach unten bewegt.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Verriegelungssystem (2) zum Verriegeln eines höhenverstellbaren Tischs (1) in einem Fahrzeug (12), wobei das Verriegelungssystem (2) aufweist:
ein erstes Verriegelungselement (9), das mit einer beweglichen Komponente des Tischs (1) fest verbindbar ist, und
ein zweites Verriegelungselement (10), das mit dem Fahrzeug (12) fest verbindbar ist, wobei
das erste Verriegelungselement (9) und das zweite Verriegelungselement (10) dazu ausgebildet sind, durch eine erste Bewegung des ersten Verriegelungselements (9) zu dem zweiten Verriegelungselement (10) in einer ersten Richtung (R1) miteinander in Eingriff zu gelangen und durch eine zweite lineare Bewegung in einer zweiten Richtung (R2), die eine andere Richtung als die erste Richtung (R1) ist, eine in der zweiten Richtung (R2) formschlüssige Verbindung herzustellen.

2. Verriegelungssystem (2) gemäß Anspruch 1, wobei das erste Verriegelungselement (9) aufweist:
eine langgestreckte Form mit einem ersten Ende (13) und einem zweiten Ende (14) in einer Längsrichtung, wobei das erste Ende (13) von der verbindbaren beweglichen Komponente abgewandt ist und das zweite Ende (14) der verbindbaren beweglichen Komponente zugewandt ist,
einen ersten Bereich (15) entlang der Längsrichtung, der senkrecht zu der Längsrichtung in einem vorbestimmten Umfangswinkelbereich eine erste Abmessung (d1) senkrecht zu der Längsrichtung aufweist, und einen zweiten Bereich (16) entlang der Längsrichtung, der senkrecht zu der Längsrichtung in dem Umfangswinkelbereich eine zweite Abmessung (d2) aufweist, wobei die erste Abmessung (d1) größer als die zweite Abmessung (d2) ist und der erste Bereich (15) dem ersten Ende (13) näher als der zweite Bereich (16) ist, und
das zweite Verriegelungselement (10) aufweist:
ein plattenförmiges Element, das eine Aussparung (11) mit einer senkrecht zu der ersten Richtung dritten Abmessung (b), die kleiner als die erste Abmessung (d1) und größer als die zweite Abmessung (d2) ist, hat, und
das erste Verriegelungselement (9) und das zweite Verriegelungselement (10) dazu ausgebildet sind, dass das erste Verriegelungselement (9) mit dem zweiten Bereich (16) in die Aussparung (11) des zweiten Verriegelungselements (10) in Eingriff kommen kann.

3. Verriegelungssystem (2) gemäß Anspruch 2, wobei
das erste Verriegelungselement (9) als Bolzen mit einem kreisrunden Querschnitt gebildet ist und die erste Abmessung (d1) ein erster Durchmesser ist und die zweite Abmessung (d2) ein zweiter Durchmesser ist.

4. Verriegelungssystem (2) gemäß Anspruch 2 oder 3, wobei
das erste Verrieglungselement (9) in der Längsrichtung zwischen dem ersten Bereich (15) und dem zweiten Bereich (16) einen Übergangsbereich (17), insbesondere einen Konus, aufweist, dessen Abmessung dazu ausgebildet ist, sich von der ersten Abmessung (d1) zu der zweiten Abmessung (d2) kontinuierlich zu verändern.

5. Verriegelungssystem (2) gemäß einem der Ansprüche 2 bis 4, wobei
das plattenförmige Element entgegen der ersten Richtung (R1) benachbart zu der Aussparung (11) eine weitere Aussparung (18) hat, deren Breite senkrecht zu der ersten Richtung (R1) entgegen der ersten Richtung (R1) kontinuierlich größer wird, um eine Einführschräge zu bilden.

6. Höhenverstellbarer Tisch (1) mit einem Verriegelungssystem (2) gemäß einem der vorangehenden Ansprüche, wobei der Tisch (1) aufweist:
eine in Einbaulage des Tischs (1) untenliegende Komponente (3), mittels der der Tisch (1) an einem Boden des Fahrzeugs (12) abstützbar ist, und
die bewegliche Komponente, die relativ zu der untenliegenden Komponente (3) beweglich ist, und die dazu ausgebildet ist, eine Tischplatte relativ zu der untenliegenden Komponente in einer Höhe zu verstellen, wobei
das erste Verriegelungselement (9) mit der beweglichen Komponente fest verbunden ist, und
der höhenverstellbare Tisch dazu ausgebildet ist, in der formschlüssigen Verbindung eine Klemmkraft in der zweiten Richtung (R2) zu erzeugen oder aufrechtzuerhalten.

7. Höhenverstellbarer Tisch (1) gemäß Anspruch 6, wobei
der Tisch (1) eine Hubsäule (4) mit drei teleskopartig ineinander beweglichen Säulen (4', 4", 4'") aufweist,
die untenliegende Komponente (3) mit einer in der Einbaulage des Tischs (1) untenliegenden Säule (4') der Hubsäule (4) verbunden oder durch die untenliegende Säule (4') ausgebildet ist, und
die bewegliche Komponente durch eine Mittelsäule (4"), die zwischen der untenliegenden Säule (4') und einer obenliegenden Säule (4"') der Hubsäule (4) angeordnet ist, gebildet ist.

8. Höhenverstellbarer Tisch (1) gemäß Anspruch 7 oder 8, wobei
die Hubsäule (4) eine Gasfeder (7) aufweist, die dazu ausgebildet ist, die bewegliche Komponente in die zweite Richtung (R2) zu drängen.

9. Höhenverstellbarer Tisch (1) gemäß einem der Ansprüche 6 bis 8, wobei der höhenverstellbare Tisch (1) eine Blockiereinrichtung (8) aufweist, die dazu ausgebildet ist, eine Bewegung der beweglichen Komponente zu der untenliegenden Komponente (3) in oder entgegen der zweiten Richtung (R2) zu blockieren.

10. Höhenverstellbarer Tisch (1) gemäß Anspruch 8 und 9, wobei die Gasfeder (7) die Blockiereinrichtung (8) aufweist.

11. Fahrzeug (12) mit einem höhenverstellbaren Tisch (1) gemäß einem der Ansprüche 6 bis 10 und einem fest mit dem Fahrzeug (12) verbundenen zweiten Verriegelungselement (10).

12. Verfahren zum Verriegeln eines höhenverstellbaren Tischs (1) gemäß einem der Ansprüche 6 bis 10 in einem Fahrzeug (12) gemäß Anspruch 11 mit den folgenden Schritten:
Bewegen des ersten Verriegelungselements (9) zu dem zweiten Verriegelungselement (10) in der ersten Richtung (R1), so dass das erste Verriegelungselement (9) und das zweite Verriegelungselement (10) miteinander in Eingriff gelangen; und
Bewegen des ersten Verriegelungselements (9) zu dem zweiten Verriegelungselement (10) in der zweiten Richtung (R2), so dass die in der zweiten Richtung (R2) formschlüssige Verbindung entsteht und die Klemmkraft in der formschlüssigen Verbindung erzeugt wird.

13. Verfahren gemäß Anspruch 12, wobei
die Bewegung des ersten Verriegelungselements (9) in der zweiten Richtung (R2) durch eine Gasfeder (7) angetrieben oder unterstützt wird.

14. Verfahren gemäß Anspruch 13, wobei
ein Feststellen der beweglichen Komponente zu der untenliegenden Komponente durch eine blockierbare Gasfeder (7) durchgeführt wird.

15. Verfahren gemäß Anspruch 14, wobei das Verfahren zum nachträglichen Lösen der in der zweiten Richtung formschlüssigen Verbindung die folgenden Schritte aufweist:
Entriegeln der blockierbaren Gasfeder (7); und
Drücken der beweglichen Komponente entgegen der zweiten Richtung (R2).
